# EUROPÄISCHE PATENTSCHRIFT

(11) **EP 1 211 131 B1**
(45) Veröffentlichungstag und Bekanntmachung des Hinweises auf die Patenterteilung: **16.01.2008**
(21) Anmeldenummer: 01128124.3
(22) Anmeldetag: 27.11.2001
(51) Int. Cl.: B60P 3/32, B60N 2/06, B60N 2/24

(54) **Sitzbank für Fahrzeuge, insbesondere Wohnmobile**
Bench for vehicle particularly camping car
Banquette pour véhicule en particulier camping-car

(30) Priorität: 28.11.2000 DE 10059043
(43) Veröffentlichungstag der Anmeldung: 05.06.2002
(73) Patentinhaber: AGUTI PRODUKTENTWICKLUNG & DESIGN GMBH, 88079 Kressbronn (DE)
(72) Erfinder: Grieger, Andreas, 88079 Kressbronn (DE)
(74) Vertreter: Fiener, Josef

(56) Entgegenhaltungen:
- DD-A- 207 884
- DE-A- 4 316 930
- FR-A- 2 761 309
- US-A- 3 880 458
- US-A- 5 516 179

## Beschreibung

Die Erfindung betrifft eine Sitzbank für Fahrzeuge, insbesondere Wohnmobile, wobei die Sitzbank in Fahrzeuglängsrichtung eingebaut ist und eine unterteilte Sitzfläche mit einer daran anschließenden Sitzlehne aufweist.

Eine solche Sitzbank ist zum Beispiel aus der US-A-5 516 179 bekannt.

Derartige Sitzbänke werden in Wohnmobilen zunehmend im Längseinbau angeordnet, um den zur Verfügung stehenden Raum in einem Wohnmobil bestmöglich zu nutzen. Der Längseinbau hat gegenüber dem Quereinbau jedoch den Nachteil, daß Mitreisende während der Fahrt auf einer derartigen Längs-Sitzbank nicht sitzen dürfen, da die entsprechenden Sicherheitsgurte fehlen bzw. bei einem Unfall die erforderlichen Rückhaltekräfte vorwiegend in Fahrzeuglängsrichtung nicht erreichbar sind. Daher sind die Plätze in derartigen Wohnmobilen auf die Sitzgelegenheiten in der Fahrkabine beschränkt.

Demzufolge liegt der Erfindung die Aufgabe zugrunde, eine Sitzbank zu schaffen, bei der im Längseinbau eine sicherheitstechnisch günstige Sitzgelegenheit geschaffen werden kann.

Diese Aufgabe wird gelöst durch eine Sitzbank gemäß den Merkmalen des Anspruches 1. Vorteilhafte Ausgestaltungen sind Gegenstand der abhängigen Ansprüche.

Durch die bewegbare Lagerung wenigstens eines Teils der Sitzfläche zusammen mit der zugeordneten Sitzlehne quer zur Fahrtrichtung wird vor der Sitzbank eine Sitzgelegenheit geschaffen, auf der eine mitreisende Person mit Blickrichtung in Fahrtrichtung sitzen kann. Damit wird auch die Voraussetzung geschaffen, daß sich die mitreisende Person vorschriftsmäßig angurten kann. Bevorzugt ist hierbei die Sitzbank in Art einer "Eckbank" ausgebildet, so daß die querverschiebbare Sitzlehne optimal in die Sitzbank integriert werden kann.

Die Bewegung quer zur Fahrtrichtung erfolgt hierbei bevorzugt über wenigstens eine teleskopartige Schiebeführung, wobei auch Schwenkführungen möglich sind, um die angestrebte Verlagerung der beweglichen Sitzfläche zusammen mit der zugeordneten Sitzlehne in etwa der Tiefe der Sitzbank zu erreichen. Von wesentlicher Bedeutung ist hierbei die Anordnung des Sicherheitsgurtes, bevorzugt eines 3-Punkt-Sicherheitsgurtes. Dabei ist wenigstens der in der Verschiebebewegung außen liegende Anlenkpunkt, im allgemeinen das Gurtschloß, an dem Gestell oder Rahmen der Schiebeführung befestigt, so daß die gesetzlich geforderte Anlenkgeometrie auch bei stationärer Anordnung der beiden anderen Anlenkpunkte erreicht wird.

Bevorzugt sind jedoch die beiden anderen Anlenkpunkte des Sicherheitsgurtes ebenfalls an der Schiebeführung mit bewegbar befestigt, so daß ein optimaler Verlauf des Sicherheitsgurtes gewährleistet ist. Um bei Kurvenfahrten eine Verschiebung des somit quer herausziehbaren Sitzes zu vermeiden, ist die Schiebeführung bzw. der Rahmen für die bewegliche Sitzfläche/Sitzlehne arretierbar, beispielsweise mit einer einfachen Raste. Zur möglichst stabilen Gestaltung des somit quer beweglichen Sitzes ist in den Rahmen für die bewegliche Sitzfläche/Sitzlehne ein Vertikalholm integriert, der zur Bildung bzw. Aufnahme des oberen Umlenkpunktes dient. In der zurückgeschobenen Stellung, wobei eine Längssitzbank gebildet ist, kann der Sicherheitsgurt an der Stoßstelle in der Ecke praktisch unsichtbar verstaut werden und erst für die Fahrt mit einer darauf sitzenden Person herausgezogen werden.

Nachfolgend wird ein Ausführungsbeispiel anhand der Zeichnungen näher erläutert und beschrieben. Hierbei zeigen
- Fig. 1: eine Perspektivdarstellung einer Sitzbank im Längseinbau;
- Fig. 2: die Sitzbank gemäß Fig. 1 mit einem ausgeschobenen Sitz, der in Fahrtrichtung zeigt; und
- Fig. 3: eine Schnittdarstellung gemäß der Schnittlinie A in Fig. 2.

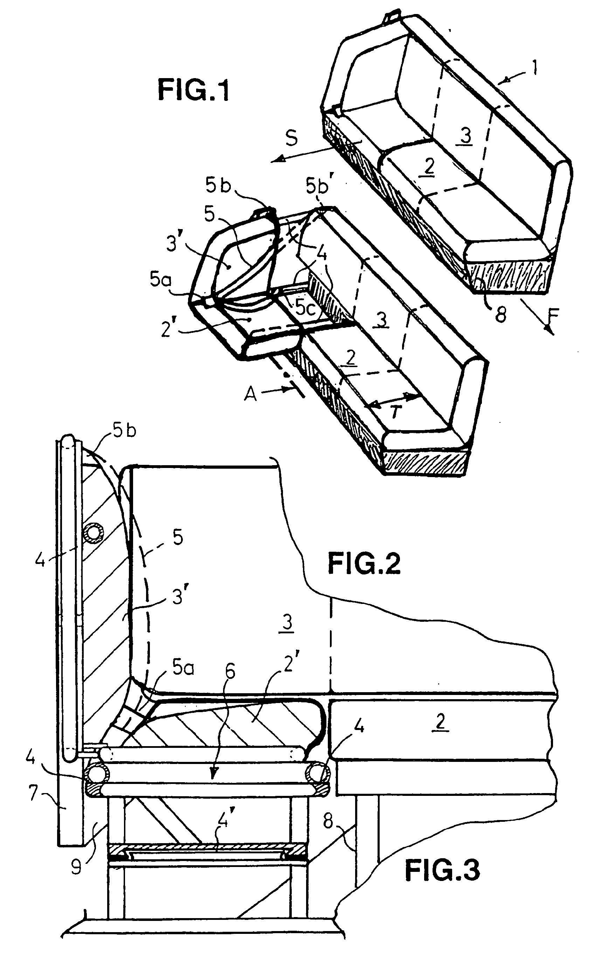

In Fig. 1 ist eine Sitzbank 1 für den Längseinbau in Fahrzeugen, insbesondere Wohnmobilen gezeigt. Die Sitzbank 1 weist beispielsweise hier drei Sitzplätze auf, die durch eine Sitzfläche 2 mit einer daran sich anschließenden Sitzlehne 3 gebildet sind. Die Sitzfläche 2 ist hierbei im hinteren Drittel unterteilt, so daß wenigstens dieser Teil der Sitzfläche 2' zusammen mit der zugeordneten Sitzlehne 3' quer zur Fahrtrichtung F (und relativ zum Sitzbank-Untergestell 8) bewegbar gelagert ist, nämlich entsprechend dem Pfeil S in die Position gemäß Fig. 2 an wenigstens einer verdeckten Schiebeführung 4 (vgl. Fig. 2) in Art einer Schublade verschiebbar bzw. herausziehbar ist.

In Fig. 2 ist die ausgeschobene Stellung der Sitzfläche 2' zusammen mit der zugeordneten Sitzlehne 3' gezeigt. Die Bewegung erfolgt hierbei quer zur Fahrtrichtung F an wenigstens einer Schiebeführung 4, die beispielsweise durch ineinandergesteckte Rohre gebildet wird. Diese Rohre können auch teleskopartig aufgebaut sein, so daß sich in dieser vorgelagerten Stellung eine stabile Ausführung des so gebildeten Sitzes ergibt. Damit die darauf sitzende Person ihre Beine in Fahrtrichtung ausstrecken kann, beträgt der Verschiebeweg etwa der Tiefe T der Sitzbank 1. Hier sind drei Anbringungorte der Schiebeführung 4 angedeutet, nämlich im oberen Bereich der Sitzlehne 3', dann in deren unteren Bereich und im in Fahrtrichtung vorderen Bereich der Sitzfläche 2'. Im allgemeinen sind zwei dieser Anbringungsorte der Schiebeführung 4 ausreichend, sofern aus besonders hohen Stabilitätsanforderungen nicht alle drei Positionen gewählt werden. Die Schiebeführungen 4 sind hierbei durch eine Rahmen 6 verbunden, der zugleich als Sitzauflage dient.

Von wesentlicher Bedeutung ist hierbei die Anbringung eines Sicherheitsgurtes 5, insbesondere eines 3-Punkt-Sicherheitsgurtes. Der außenliegende Anlenkpunkt 5a des Sicherheitsgurtes 5 ist hierbei an dem äußeren Ende der (mittleren) Schiebeführung 4 befestigt, so daß im allgemeinen hierdurch das sogenannte Gurtschloß gebildet wird. Die beiden anderen Anlenkpunkte 5b und 5c sind hierbei ebenfalls mit der (oberen und/vorderen) Schiebeführung 4 mitbewegbar befestigt. Wie in Strichlinien für den Schräggurt 5 angedeutet, können diese beiden Anlenkpunkte auch fahrzeugseitig fest angeordnet sein, wie dies mit den Bezugszeichen 5b' angedeutet ist. Hierdurch ergibt sich zwar ein etwas ungünstiger Gurtverlauf, der jedoch innerhalb den gesetzlich festgelegten Grenzen liegt, andererseits jedoch den Aufbau besonders einfach gestaltet. Zur Optimierung des Gurtverlaufes sind die Anlenkpunkte 5b und 5c jedoch mit der Schiebeführung 4 mitbewegbar, wobei an dem verschiebbaren Rahmen 6 für die bewegliche Sitzfläche 2'/Sitzlehne 3' bevorzugt ein aufrechtstehender Vertikalholm 7 (vgl. auch Fig. 3) integriert ist.

In Fig. 3 ist ein Querschnitt durch den so gebildeten, ausschiebbaren Sitz gezeigt. Hieraus ist insbesondere die rohrartige Gestaltung der Schiebeführung 4 ersichtlich sowie die stabile Ausführung des Vertikalholmes 7, der bevorzugt mittels Knotenblechen 9 mit der Schiebeführung 4 bzw. dem Rahmen 6 verbunden ist. Die Schiebeführung 4 kann auch durch eine weiter unten angeordnete Schwalbenschwanzführung 4' ergänzt oder ersetzt sein, so daß sich eine besonders stabile Ausführung des von der Sitzbank 1 und dessen Untergestell 8 (in Fig. 1 und 2 verkleidet dargestellt) seitlich in Richtung S abkragenden Sitzes ergibt.

Insbesondere wird hierbei eine besonders schnelle Umstellung von der "Normalposition" gemäß Fig. 1 in die Fahrtposition gemäß Fig. 2 erzielt. Zur Fixierung des ausgeschobenen Sitzes gegenüber der Sitzbank 1 kann eine nicht näher dargestellte Raste in Art eines Sicherheitsschloßes vorgesehen sein, um hierdurch während der Fahrt Bewegungen in Querrichtung S zu vermeiden. Nach Betätigung einer derartigen Arretierung, beispielsweise einer Raste oder eines Federbolzens in der Schiebeführung 4, 4' kann somit der vom Untergestell 8 seitlich (in Fahrzeugquerrichtung) auskragende Sitz wieder zur Bildung der "kompletten" Sitzbank 1 zurückgeschoben werden. In dieser Stellung gemäß Fig. 1 kann die Sitzbank 1 in Ruhestellung des Fahrzeuges als Schlaf- oder Ruhecouch benutzt werden.

## Patentansprüche

1. Sitzbank (1) für Fahrzeuge, insbesondere Wohnmobile, wobei die Sitzbank (1) in Fahrzeuglängsrichtung eingebaut ist und eine unterteilte Sitzfläche (2) mit einer daran anschließenden Sitzlehne (3) aufweist,
**dadurch gekennzeichnet, daß**
wenigstens ein Teil de Sitzfläche (2') zusammen mit einer ihr zugeordneten, quer zur Fahrtrichtung (F) angeordneten Sitzlehne (3') quer zur Fahrtrichtung (F) bewegbar gelagert ist.

2. Sitzbank (1) für Fahrzeuge nach Anspruch 1, **dadurch**
**gekennzeichnet, daß**
zur Bewegung quer zur Fahrtrichtung (F) wenigstens eine Schiebeführung (4, 4') vorgesehen ist.

3. Sitzbank (1) für Fahrzeuge nach Anspruch 2, **dadurch**
**gekennzeichnet, daß**
die Schiebeführung (4, 4') teleskopartig aufgebaut ist.

4. Sitzbank (1) für Fahrzeuge nach einem der Ansprüche 1 bis 3,
**dadurch gekennzeichnet, daß**
der Bewegungs-/Verschiebeweg etwa der Tiefe (T) der Sitzbank (1) entspricht.

5. Sitzbank (1) für Fahrzeuge nach einem der Ansprüche.1 bis 4,
**dadurch gekennzeichnet, daß**
der bewegbaren Sitzfläche (2') und/oder der ihr zugeordneten Sitzlehne (3') ein Sicherheitsgurt (5), insbesondere ein 3-Punkt-Sicherheitsgurt zugeordnet ist.

6. Sitzbank (1) für Fahrzeuge nach Anspruch 5, **dadurch**
**gekennzeichnet, daß**
wenigstens ein Anlenkpunkt (5a) des Sicherheitsgurtes (5) an der Schiebeführung (4, 4') befestigt ist.

7. Sitzbank (1) für Fahrzeuge nach Anspruch 6, **dadurch**
**gekennzeichnet, daß**
ein weiterer Anlenkpunkt (5b, 5c) des Sicherheitsgurtes (5) mit der Schiebeführung (4, 4') mit bewegbar befestigt ist.

8. Sitzbank (1) für Fahrzeuge nach einem der Ansprüche 1 bis 7,
**dadurch gekennzeichnet, daß**
für die bewegbare Sitzfläche (2') und der ihr zugeordneten Sitzlehne (3') ein gemeinsamer Rahmen (6) vorgesehen ist.

9. Sitzbank (1) für Fahrzeuge nach Anspruch 8, **dadurch**
**gekennzeichnet, daß**
der Rahmen (6) in der ausgeschobenen Stellung arretierbar ist.

10. Sitzbank (1) für Fahrzeuge nach Anspruch 8 oder 9 wenn diese auf einen der Ansprüche 5-7 rückbezogen sind, **dadurch**
**gekennzeichnet, daß**
an dem Rahmen (6) ein Vertikalholm (7) zur Aufnahme des oberen Umlenkpunktes (5b) des Sicherheitsgurtes (5) vorgesehen ist.

## Claims

1. Bench seat (1) for vehicles, in particular camping cars, the bench seat (1) being installed in a longitudinal direction of the vehicle and having a subdivided seat (2) with a backrest (3) associated therewith,
**characterized in that**
at least one part of the seat (2') is movably supported in a cross direction to the driving direction (F), together with a backrest (3') assigned thereto and arranged in a cross direction to the driving direction (F).

2. Bench seat (1) for vehicles according to claim 1, **characterized in that**
at least one sliding guidance (4, 4') is provided for a movement transverse to the driving direction (F).

3. Bench seat (1) for vehicles according to claim 2, **characterized in that**
the design of the sliding guidance (4, 4') is of a telescopic type.

4. Bench seat (1) for vehicles according to any of claims 1 to 3, **characterized in that**
the move/shift travel broadly corresponds to the depth (T) of the bench seat (1).

5. Bench seat (1) for vehicles according to any of claims 1 to 4, **characterized in that**
a safety belt (5), in particular a 3-point safety belt, is assigned to the movable seat (2') and/or the backrest (3') associated thereto.

6. Bench seat (1) for vehicles according to claim 5, **characterized in that**
at least one coupling point (5a) of the safety belt (5) is fastened to the sliding guidance (4, 4').

7. Bench seat (1) for vehicles according to claim 6, **characterized in that**
a further coupling point (5b, 5c) of the safety belt (5) is fastened to be movable with the sliding guidance (4, 4').

8. Bench seat (1) for vehicles according to any of claims 1 to 7, **characterized in that**
a common framework (6) is provided for the movable seat (2') and the backrest (3') associated thereto.

9. Bench seat (1) for vehicles according to claim 8, **characterized in that**
the framework (6) is lockable in the extended position.

10. Bench seat (1) for vehicles according to claim 8 or claim 9, if related to any of claims 5 - 7, **characterized in that**
a vertical side rail (7) for receiving the upper deviating point (5b) of the safety belt (5) is provided at the framework (6).

## Revendications

1. Banquette (1) pour véhicules, notamment pour camping-cars, la banquette (1) étant installée dans la direction longitudinale du véhicule et présentant une surface d'assise (2) divisée à laquelle est relié un dossier (3), **caractérisée en ce qu'**au moins une partie de la surface d'assise (2') est montée, conjointement avec un dossier (3') qui lui est associé et qui est disposé transversalement par rapport à la direction de déplacement (F), de façon à être mobile transversalement par rapport à la direction de déplacement (F).

2. Banquette (1) pour véhicules selon la revendication 1, **caractérisée en ce qu'**au moins une glissière (4, 4') est prévue pour le déplacement transversalement par rapport à la direction de déplacement (F).

3. Banquette (1) pour véhicules selon la revendication 2, **caractérisée en ce que** la glissière (4, 4') est conçue de façon télescopique.

4. Banquette (1) pour véhicules selon l'une des revendications 1 à 3, **caractérisée en ce que** la distance de déplacement/coulissement correspond approximativement à la profondeur (T) de la banquette (1).

5. Banquette (1) pour véhicules selon l'une des revendications 1 à 4, **caractérisée en ce qu'**une ceinture de sécurité (5), notamment une ceinture de sécurité à 3 points, est associée à la surface d'assise mobile (2') et/ou au dossier (3') qui lui est associé.

6. Banquette (1) pour véhicules selon la revendication 5, **caractérisée en ce qu'**au moins un point d'articulation (5a) de la ceinture de sécurité (5) est fixé à la glissière (4, 4').

7. Banquette (1) pour véhicules selon la revendication 6, **caractérisée en ce qu'**un autre point d'articulation (5b, 5c) de la ceinture de sécurité (5) est fixé de manière à pouvoir accompagner le déplacement de la glissière (4, 4').

8. Banquette (1) pour véhicules selon l'une des revendications 1 à 7, **caractérisée en ce qu'**est prévu un cadre (6) commun à la surface d'assise mobile (2') et au dossier (3') qui lui est associé.

9. Banquette (1) pour véhicules selon la revendication 8, **caractérisée en ce que** le cadre (6) peut être bloqué en position déployée.

10. Banquette (1) pour véhicules selon la revendication 8 ou 9, dans la mesure où ces dernières se réfèrent à l'une des revendications 5 à 7, **caractérisée en ce qu'**un montant vertical (7) est prévu sur le cadre (6) pour recevoir le point d'articulation supérieur (5b) de la ceinture de sécurité (5).
